# EUROPÄISCHE PATENTSCHRIFT

(11) **EP 1 931 953 B1**
(45) Veröffentlichungstag und Bekanntmachung des Hinweises auf die Patenterteilung: **19.09.2012**
(21) Anmeldenummer: 06819069.3
(22) Anmeldetag: 03.10.2006
(51) Int. Cl.: G01F 13/00, G01G 11/08, B65B 1/10, B65B 1/32

(54) **DOSIEREINRICHTUNG FÜR PULVER- ODER PASTENFÖRMIGE SUBSTANZEN**
DOSING DEVICE FOR POWDERY OR PASTY SUBSTANCES
DISPOSITIF DE DOSAGE POUR SUBSTANCES PULVERULENTES OU PATEUSES

(30) Priorität: 03.10.2005 EP 05109150; 03.10.2005 EP 05109151
(43) Veröffentlichungstag der Anmeldung: 18.06.2008
(73) Patentinhaber: Mettler-Toledo AG, 8606 Greifensee (CH)
(72) Erfinder: LÜCHINGER, Paul, CH-8610 Uster (CH)
(86) Internationale Anmeldenummer: PCT/EP2006/067010
(87) Internationale Veröffentlichungsnummer: WO 2007/039613

(56) Entgegenhaltungen:
- EP-A- 0 654 422
- DE-A1- 19 841 478
- FR-A- 2 607 794
- GB-A- 701 572
- US-A- 2 084 029
- PATENT ABSTRACTS OF JAPAN Bd. 009, Nr. 177 (P-375), 23. Juli 1985 (1985-07-23) -& JP 60 052724 A (NIPPON KOKAN KK), 26. März 1985 (1985-03-26)

## Beschreibung

Die Erfindung betrifft eine Dosiereinrichtung für pulver- oder pastenförmige Substanzen, welche einen mit einem Quell- oder Entnahmegefäss verbindbaren oder mit diesem verbundenen Dosierkopf aufweist.

Solche Dosiereinrichtungen finden insbesondere beim Dosieren kleiner Mengen beispielsweise toxischer Substanzen, mit hoher Präzision in kleine Zielgefässe Verwendung. Häufig sind solche Zielgefässe auf einer Waage platziert, um die Menge der aus der Dosiereinrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches mit dem Dosierkopf in Verbindung steht und für das Dosieren mit diesem eine Einheit - die Dosiereinrichtung - bildet. Dabei ist es wünschenswert, die zu dosierende Substanz durch eine kleine Öffnung der Dosiereinrichtung auszutragen, so dass sie auch gezielt in ein Gefäss mit einem kleinen Öffnungsquerschnitt abgefüllt werden kann.

Dosiereinrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Ausgabebehälter mit einem verschliessbaren Auslass an seiner Unterseite besteht. Als Verschluss dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt.

Die beschriebene Einrichtung eignet sich weniger gut für das Dosieren von Schüttgut in Gefässe mit einem kleinen Öffnungsquerschnitt. Die sich nach oben verjüngende Struktur des Ventilkörpers.sowie dessen Rotation ergeben eine Radial- bzw. Horizontalkomponente der Schüttgutpartikel am Auslass und verursachen demzufolge eine Streuung, die selbst über einen relativ breiten Öffnungsquerschnitt eines abzufüllenden Gefässes hinausreichen kann.

Ein Verfahren und eine Vorrichtung zum Austragen einer pulver- oder pastenförmigen Kleinstmengenprobe, beispielsweise für die Atomabsorptionsspektroskopie, offenbart die US 4 905 525 A. In einem Vorratsbehälter mit einer Auslassöffnung am Ende eines Formkanals ragt von oben her ein Stempel in das im Behälter befindliche Probenmaterial. Eine kleine Probenmenge wird durch den Formkanal gepresst und aus der Auslassöffnung ausgetragen, indem der Stempel in das Probenmaterial gedrückt wird, so dass es sich oberhalb des Formkanals verdichtet. In einer speziellen Ausführungsform ist der Behälter zur Auslassöffnung hin trichterförmig ausgebildet und der Stempel ist schräg zur Auslassöffnung angeordnet.

In der DE 198 41 478 A1 ist eine Dosiereinrichtung zum Abfüllen von viskosen, pastösen, pulverförmigen oder granulatförmigen Produkten beschrieben, mit einem Dosierbehälter, der in der für den Betrieb positionierten Dosiereinrichtung sich zu seinem unteren Ende hin verjüngt und eine dort angeordnete Austrittsöffnung aufweist. An einer zentral angeordneten rotierbar ausgestalteten Hohlwelle sind Abstreifwerkzeuge befestigt. Die Dosiereinrichtung verfügt über ein Dosierventil, das eine in der Hohlwelle angeordnete und translatorisch auf und ab bewegbare Ventilstange aufweist, an deren unterem Ende ein kegelförmig sich nach oben verjüngender Ventilkopf angeordnet ist, so dass die Austrittsmenge des Abfüllguts geregelt und die Austrittsöffnung von oben her geschlossen werden kann. In einigen der beschriebenen Ausführungsformen ist auch das Dosierventil rotierbar ausgebildet.

Bei einer Dosiereinrichtung gemäss der DE 198 41 478 A1 oder gemäss der US 5 145 009 A kann die aus dem Behälter auszutragende Menge nicht beliebig klein gehalten werden. Da die Austrittsöffnung ringförmig ist, ist die minimal zum Dosieren verwendbare Breite des Ringspaltes auf mindestens die Ausdehnung einer kleinsten Schüttguteinheit - beispielsweise eines Pulverkorns - begrenzt, wodurch gleichzeitig mehrere Schüttguteinheiten aus dem Ringspalt austreten können. Ferner besteht die Gefahr, dass je nach Beschaffenheit des Schüttgutes ein Teil des Spalts verstopft werden kann. Dies kann insbesondere dann erfolgen, wenn gegen Ende des Dosiervorgangs durch Reduktion der Breite des Ringspalts die Austragungsrate reduziert werden soll, da dabei dessen Breite im Verhältnis zu dessen Länge beziehungsweise Umfang stetig ungünstiger wird.

Aufgabe der Erfindung ist es, eine Dosiereinrichtung zur Verfügung zu stellen, mit welcher Kleinstmengen von pulver- oder pastenförmigen Substanzen gezielt in ein Gefäss eingefüllt werden können.

Diese Aufgabe wird gelöst durch die Merkmale der unabhängigen Ansprüche.

Eine Dosiereinrichtung für pulver- oder pastenförmige Substanzen ist mit einem Entnahmegefäss und einem damit verbundenen oder verbindbaren Dosierkopf versehen, der ein Gehäuse aufweist, welches eine mit kreisförmigem Querschnitt versehene Austrittsöffnung besitzt. Ferner weist der Dosierkopf ein Austragungs- und Verschlusselement auf, wobei die Austrittsöffnung und das Austragungs- und Verschlusselement auf der Mittellängsachse des Dosierkopfs angeordnet sind, und das Austragungs- und Verschlusselement relativ zum Gehäuse um die Mittellängsachse rotierbar und entlang der Mittellängsachse bezüglich der Austrittsöffnung translatorisch verschiebbar ausgestaltet ist. Das Austragungs- und Verschlusselement ist in seiner Grundform zylinderförmig ausgebildet und weist mindestens zwei dem Verschliessen der Austrittsöffnung dienende, entlang der Mittellängsachse voneinander beabstandet angeordnete zylinderförmige Verschlussbereiche und einen zwischen den Verschlussbereichen angeordneten, der Austragung von zu dosierender Substanz dienenden Austragungsbereich auf, wobei der Austragungsbereich mit mindestens einer vom Zylindermantel ausgehenden Vertiefung versehen ist.

Die Dosiereinrichtung ist besonders gut geeignet für das Dosieren von stark koagulierenden Substanzen, da sie das portionsweise Austragen selbiger ermöglicht.

Im betriebsbereitem Zustand der Dosiereinrichtung ein erster Verschtussbereich unterhalb des Austragungsbereichs und ein zweiter Verschlussbereich ist oberhalb des Austragungsbereichs angeordnet..Das Austragungs- und Verschlusselement ist sowohl wenn sich der erste Verschlussbereich in der Austrittsöffnung befindet, als auch wenn sich der zweite Verschlussbereich in der Austrittsöffnung befindet, um die Mittellängsachse rotierbar, um das Befüllen der mindestens einen Vertiefung, wenn diese sich innerhalb des Dosierkopfs befindet, wie auch das Freigeben der zu dosierenden Substanz aus der mindestens einen Vertiefung, wenn diese sich ausserhalb des Dosierkopfs befindet, zu ermöglichen.

Die mindestens eine Vertiefung im Austragungsbereich des Austragungs- und Verschlusselements weist in einer besonderen Ausgestaltung eine stetige Oberfläche auf. Dabei kann die Austragungsfläche in einer oder in zwei Richtungen konkav gekrümmt ausgeformt und gegebenenfalls um die Mittellängsachse verwunden ausgestaltet sein. Die mindestens eine Vertiefung kann auch eine unstetige Oberfläche besitzen. Im letzteren Fall wird die Vertiefung beispielsweise durch eine Kerbe gebildet.

Insbesondere variiert die Breite und die Tiefe der jeweiligen Vertiefung, insbesondere der Kerbe, derart, dass sie zum ersten Verschlussbereich hin kleiner wird.

Das Austragungs- und Verschlusselement ist bevorzugt aus Metall oder aus Keramik gefertigt, wobei die Oberfläche der mindestens eine Vertiefung eine Oberflächenrauhigkeit Rₐ kleiner als 0.003 mm besitzt.

In einer vorteilhaften Ausführungsform weist der Austragungsbereich mindestens zwei, insbesondere drei, übereinander abgeordnete Vertiefungen, insbesondere kreisförmige Mulden auf. Dies erlaubt ein sequentielles Dosieren von Portionen der zu dosierenden Substanz.

In der ersten Geschlossenstellung des Austragungs- und Verschlusselements schliesst der erste Verschlussbereich an dessen in der Betriebsstellung unterem Ende bündig mit dem Gehäuse ab. In einer besonders vorteilhaften Ausführungsform weist der Verschlussbereich eines Austragungs- und Verschlusselements an seiner Stirnfläche eine von einem als Tropfkante wirkenden Rand umschlossene Vertiefung auf.

Die Dosiereinrichtung umfasst in einer besonders bevorzugten Weiterbildung ein Zufuhrwerkzeug, welches ebenfalls um die Mittellängsachse rotierbar ausgestaltet ist, und beim Befüllen innerhalb des Dosierkopfs zu dosierende Substanz, der mindestens einen Vertiefung zuführt sowie die an der die Austrittsöffnung umgebenden Kante des Gehäuses, im Folgenden als der Rand der Austrittsöffnung bezeichnet, haftende Substanz von dieser löst. Somit verbleibt beim Dosieren keine Substanz in der Austrittsöffnung, welche sich eventuell beim vollständigen Verschliessen derselben nach Beendigung des Dosiervorgangs verklemmen würde und damit das vollständige Verschliessen verunmöglichen könnte. Auch ist es mit dem Zufuhrwerkzeug möglich, stark koagulierende Pulver sowie Pulver mit geladenen Partikeln oder Pasten zu dosieren, indem es diese Substanzen auflockert, der Austrittsöffnung zuführt und vom Rand der Austrittsöffnung abstreift.

Das Zufuhrwerkzeug kann mittels Federkraft gegen den Rand der Austrittsöffnung gedrückt werden. In bevorzugter Ausfertigung weist es einen Rührteil und ein Zufuhrelement auf, wobei dieses Zufuhrelement in vorteilhafter Ausgestaltung einen flächigen Bereich umfasst und im Betrieb stets lose mit dem Rand der Austrittsöffnung in Kontakt ist. In spezifischer Ausgestaltung besitzt das Zufuhrelement eine Spitze, die im Betrieb den Rand der Austrittsöffnung kontaktiert.

Die Position des Zufuhrelements im Zufuhrwerkzeug weist bevorzugt einen spitzen Anstellwinkel in tangentialer Richtung bezüglich seiner Kreisbahn bei Rotation um die Mittellängsachse auf und/oder das Zufuhrelement ist unter einem spitzen Winkel gegenüber der Mittellängsachse geneigt..

In einer spezifischen Ausführungsform ist das Austragungs- und Verschlusselement mit einer entlang der Mittellängsachse angeordneten Stange, welche das Entnahmegefäss als Antriebswelle durchdringt, verbunden, wobei das Zufuhrwerkzeug relativ zur Stange und dem Austragungs- und Verschlusselement translatorisch entlang der Mittellängsachse verschiebbar gelagert ist.

In einer besonders bevorzugten Weiterbildung weist der Dosierkopf der Dosiereinrichtung und/oder die Dosiereinrichtung selbst ein Gehäuse auf, welches sich in Richtung zur Austrittsöffnung hin verjüngt.

In einem weiteren Aspekt der Erfindung ist mindestens ein ausserhalb der Dosiereinrichtung angeordneter Agitator zum Entfernen der zu dosierenden Substanz aus der mindestens einen Vertiefung vorhanden. Der Agitator umfasst in bevorzugter Ausfertigung in die mindestens eine Vertiefung eingreifbare Bürsten oder Lamellen. Alternativ kann der Agitator auch als mindestens eine mit ihrer Mündung dem Austragungs- und Verschlusselement zugewandte Druckluftdüse ausgeformt sein.

In einer weiteren vorteilhaften Ausbildung kann der Agitator ein Schlag- und/oder Vibrationswerkzeug aufweisen, welches parallel und/oder orthogonal zur Mittellängsachse auf das Gehäuse und/oder das Austragungs- und Verschlusselement und/oder die Stange einwirkbar ausgeformt ist.

In einem mit der Dosiervorrichtung ausführbaren Verfahren zum Dosieren von pulver - oder pastenförmigen Substanzen aus einem Entnahmegefäss mit einem damit verbundenen oder verbindbaren Dosierkopf werden folgende Verfahrensschritte durchgeführt
- in einem ersten Geschlossenzustand der Austrittsöffnung, bei dem sich der erste Verschlussbereich innerhalb der Austrittsöffnung und der Austragungsbereich innerhalb des Dosierkopfs befinden, wird die mindestens eine Vertiefung vermittels Rotation des Austragungs- und Verschlusselements mit Substanz befüllt;
- die mindestens eine mit Dosiergut befüllte Vertiefung des Austragungsbereichs wird vermittels einer translatorischenVerschiebung des Austragungs- und Verschlusselements entlang der Mittellängsachse in einen Bereich ausserhalb des Dosierkopfs transportiert;
- und in einem zweiten Geschlossenzustand der Austrittsöffnung, bei dem sich der zweite Verschlussbereich innerhalb der Austrittsöffnung befindet, wird die Substanz aus der mindestens einen Vertiefung mittels Rotation des Austragungs- und Verschlusselements abgegeben.

In bevorzugter Ausführung des Verfahrens wird vermittels des Zufuhrwerkzeugs zu dosierende Substanz in die mindestens eine Vertiefung eingebracht.

Ist ein ein Agitator vorhanden wird vermittels des Agitators die Substanz aus der mindestens einen Vertiefung des Austragungsbereichs freigesetzt beziehungsweise abgegeben.

Die Dosiereinrichtung wird anhand von Beispielen, wie sie schematisch in den Zeichnungen dargestellt sind, im Folgenden beschrieben. Es zeigen:
- Figur 1: eine Dosiereinrichtung mit einem auf ein Entnahmegefäss aufgeschraubten Dosierkopf in dreidimensionaler Darstellung;
- Figur 2a: einen Dosierkopf mit einer ersten Ausführungsform des Austragungs- und Verschlusselements in der zweiten Geschlossenstellung in dreidimensionaler Darstellung, wobei dessen Gehäuse der Länge nach aufgeschnitten ist;
- Figur 2b: einen Dosierkopf mit einer ersten Ausführungsform des Austragungs- und Verschlusselements in der ersten Geschlossenstellung in dreidimensionaler Darstellung, wobei dessen Gehäuse der Länge nach aufgeschnitten ist;
- Figur 3: den Dosierkopf aus Figur 2b, wobei ein Zufuhrwerkzeug vorhanden ist;
- Figur 4a: einen Schnitt durch den Dosierkopf aus Figur 3, jedoch mit dem Austragungs- und Verschlusselement in der zweiten Geschlossenstellung;
- Figur 4b: einen Schnitt durch den Dosierkopf aus Figur 3, wobei das Austragungs-und Verschlusselements in der ersten Geschlossenstellung gezeigt ist;
- Figur 5: das in den vorangehenden Figuren gezeigte Austragungs- und Verschlusselement in einer Schnittzeichnung,
- Figur 6a: einen Dosierkopf mit einer zweiten Ausführungsform des Austragungs-und Verschlusselements in der ersten Geschlossenstellung und mit einer zweiten Ausführungsform des Zufuhrwerkzeugs in dreidimensionaler Darstellung, wobei das Gehäuse der Länge nach aufgeschnitten ist;
- Figur 6b: eine Seitenansicht des Dosierkopfs aus Figur 6a, wobei dessen Gehäuse der Länge nach aufgeschnitten ist;
- Figur 7a: einen Dosierkopf mit einer dritten Ausführungsform des Austragungs- und Verschlusselements in der Geschlossenstellung und einer dritten Ausführungsform des Zufuhrwerkzeugs in dreidimensionaler Darstellung, wobei das Gehäuse der Länge nach aufgeschnitten ist;
- Figur 7b: eine Seitenansicht des Dosierkopfs aus Figur 7a, wobei dessen Gehäuse der Länge nach aufgeschnitten ist;
- Figur 8a: das Austragungs- und Verschlusselement aus den Figuren 1 bis 5 in der Seitenansicht;
- Figur 8b: das Austragungs- und Verschlusselement aus Figur 8a in dreidimensionaler Darstellung
- Figur 8c: das Austragungs- und Verschlusselement aus Figur 8b gegenüber der dortigen Darstellung gedreht;
- Figur 9a: die zweite Ausgestaltung des Austragungs- und Verschlusselements, wie sie in den Figuren 6a und 6b gezeigt ist, seitlich mit Blick auf die Austragungsfläche;
- Figur 9b: die zweite Ausgestaltung des Austragungs- und Verschlusselements in dreidimensionaler Darstellung,
- Figur 10a: eine fünfte Ausgestaltung des Austragungs- und Verschlusselements in seitlicher Ansicht;
- Figur 10b: eine fünfte Ausgestaltung des Austragungs- und Verschlusselements in dreidimensionaler Darstellung;
- Figur 11 a: die dritte Ausgestaltung des Austragungs- und Verschlusselements, wie sie in den Figuren 7a und b gezeigt ist, seitlich mit Blick auf die Austragungsfläche,

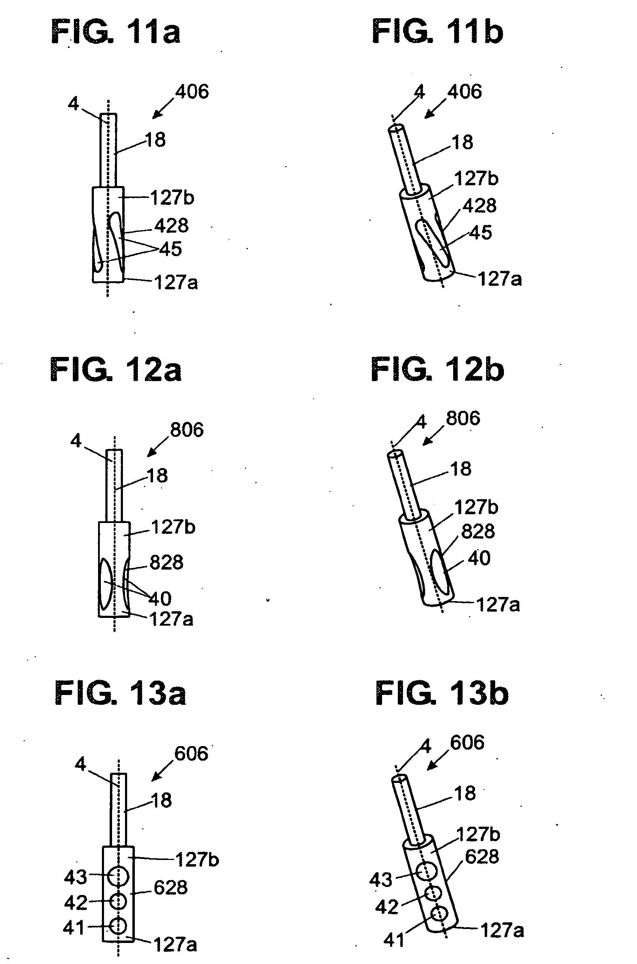

- Figur 11 b: die dritte Ausgestaltung des Austragungs- und Verschlusselements in einer dreidimensionalen Darstellung;
- Figur 12a: eine vierte Ausgestaltung des Austragungs- und Verschlusselements, seitlich mit Blick auf die Austragungsflächen;
- Figur 12b: die vierte Ausgestaltung des Austragungs- und Verschlusselements in einer dreidimensionalen Darstellung;
- Figur. 13a: eine sechste Ausgestaltung des Austragungs- und Verschlusselements, seitlich mit Blick auf die Austragungsflächen;
- Figur 13b: die sechste Ausgestaltung des Austragungs- und Verschlusselements in einer dreidimensionalen Darstellung;

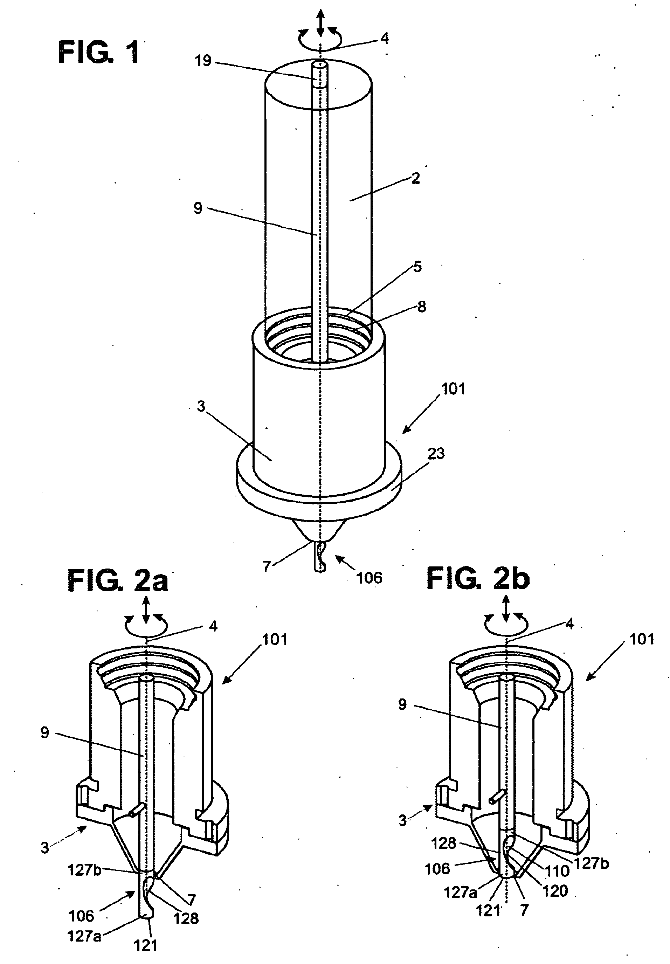

Figur 1 zeigt eine Dosiereinrichtung für pulver- oder pastenförmige Substanzen; welches einen Dosierkopf 101 und ein Entnahmegefäss 2 umfasst. Die Dosiereinrichtung ist im Wesentlichen axialsymmetrisch ausgestaltet und ist in ihrer Betriebsstellung, beispielsweise wenn dosiert werden soll, beziehungsweise im betriebsbereiten Zustand, mit ihrer Mittellängsachse 4 in vertikaler Richtung ausgerichtet. Der ein Gehäuse 3 aufweisende Dosierkopf 101 befindet sich in der Figur 1 unterhalb des Entnahmegefässes 2. Er ist auf das Entnahmegefäss 2 aufgesetzt und wurde vor dem Befüllen des Entnahmegefässes 2 mittels eines Innengewindes 5 des Dosierkopfs 101 und eines Aussengewindes 8 des Entnahmegefässes 2 auf dieses aufgeschraubt. Der Dosierkopf kann prinzipiell in jeder aus dem Stand der Technik bekannten Weise trennbar mit dem Entnahmegefäss verbunden sein, oder auch fest mit dem Entnahmegefäss verbunden sein. Zum Zwecke einer erleichterten Reinigung ist jedoch ein aufsetz- und gegebenenfalls aufschraubbarer Dosierkopf 101 vorzüziehen.

Das Gehäuse 3 weist einen Vorsprung 23 auf, der beispielsweise dem Befestigen der Dosiereinrichtung in einem hier nicht gezeigten Halter dient. Das Gehäuse 3 verjüngt sich zur Austrittsöffnung 7 hin. Diese Verjüngung, wenngleich bevorzugt, ist jedoch nicht zwingend notwendig.

Wie in der Figur 1 zu sehen ist, ragt ein Austragungs- und Verschlusselement 106 - hier in einer ersten Form gezeigt - aus der Austrittsöffnung 7 heraus. Es befindet sich dabei ein zweiter Verschlussbereich 127b in der Austragungsöffnung 7, wie anhand der Figur 2b detailliert erläutert wird. In dieser Stellung kann zu dosierende Substanz, die mittels des Austragungs- und Verschlusselements 106 aus dem Dosierkopf 3 nach aussen befördert wurde, an ein unterhalb der Dosiervorrichtung befindliches Gefäss abgegeben werden. Eine mit dem Austragungs- und Verschlusselement 106 verbundene Stange 9 durchsetzt - eine Antriebswelle bildend - das Entnahmegefäss 2 und ragt in der Figur 1 mit ihrem oberen Ende aus dem Entnahmegefäss 2 heraus. Dort weist die Stange 9 einen Kupplungsbereich 19 für eine hier nicht gezeigte Antriebsvorrichtung auf, sei dies ein Handantrieb oder ein motorischer Antrieb.

In der Figur 2a ist ein Dosierkopf 101 mit einer ersten Ausführungsform eines Austragungs- und Verschlusselements 106 in dreidimensionaler Darstellung gezeigt, wobei das Gehäuse 3 des Dosierkopfs 101 der Länge nach aufgeschnitten ist. Das Austragungs- und Verschlusselement 106 weist zwei Verschlussbereiche 127a, 127b auf, welche jeweils zylinderförmig ausgestaltet sind.

Die Austrittsöffnung 7 ist verschlossen indem sich der zweite Verschlussbereich 127b innerhalb derselben befindet. Das Austragungs- und Verschlusselement 106 ist mit der Stange 9, welche sich entlang der Mittellängsachse 4 des Dosierkopfes 101 bzw. der Dosiereinrichtung erstreckt, fest verbunden. Die Stange 9 und damit das Austragungs-und Verschlusselement 106 sind sowohl um die Mittellängsachse 4 rotierbar als auch entlang dieser verschiebbar ausgestaltet. Dabei wird die Stange 9 vorzugsweise motorisch angetrieben. Es versteht sich von selbst, dass das Austragung- und Verschlusselement zusammen mit der Stange auch einstückig ausgebildet sein kann.

Die Figur 2b zeigt den Dosierkopf in gleicher Darstellung, wie die Figur 2a, wobei hier das Austragungs- und Verschlusselement 106 sich mit seinem ersten Verschlussbereich 127a in der Austrittsöffnung 7 befindet. Durch translatorisches Verschieben des Austragungs- und Verschlusselements 106 entlang der Mittellängsachse 4, d.h. in den Figuren 2a und 2b in vertikaler Richtung erfolgt ein Öffnen und Wiederverschliessen der Austrittsöffnung 7.

Das Austragungs- und Verschlusselements 106 ist in seiner Grundform zylinderförmig. Im seinem Austragungsbereich 128 weist das Austragungs- und Verschlusselement 106 eine von der Zylindermantelfläche ausgehende Vertiefung in Form der Aussparung 120 auf, welche den Austragungsbereich formt. Die Oberfläche dieser Aussparung 120 ist stetig und bildet eine Austragungsfläche 110. Das Austragungs-und Verschlusselement 106 ist bevorzugt aus Metall oder aus Keramik gefertigt, wobei die Oberfläche der mindestens einen Vertiefung eine Oberflächenrauhigkeit Rₐ kleiner als 0.003 mm besitzt. Der erste Verschlussbereich 127a ist in der für den Betrieb angeordneten Dosiereinrichtung unterhalb des Austragungsbereichs 128 angeordnet und der zweite Verschlussbereich 127b oberhalb. Der erste Verschlussbereich 127a bildet somit das äussere Ende des Austragungs- und Verschlusselements 106. Auf diese Weise kann die die Unterkante des Austragungs- und Verschlusselements 106 bildende Fläche 121 die Austrittsöffnung 7 des Dosierkopfs 101 bündig abschliessen, wie in der Figur 2b gezeigt wird.

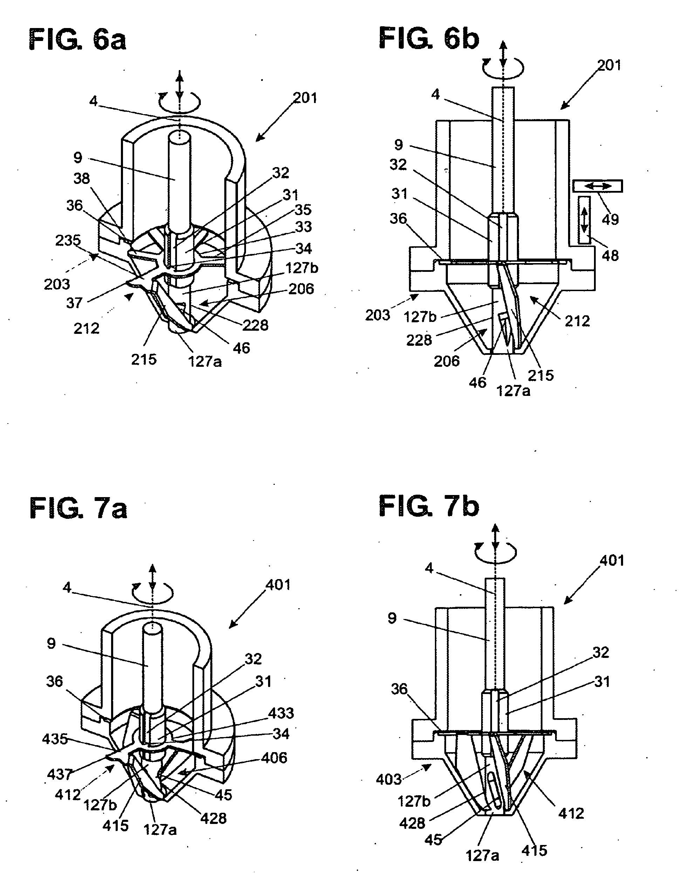

Im Fall des Dosierens, ist die Austrittsöffnung 7 zunächst geschlossen, indem sich das Austragungs- und Verschlusselement 106 mit dem ersten Verschlussbereich 127a in der Austrittsöffnung 7 befindet. Indem das Austragungs- und Verschlusselement 106 in diesem ersten Geschlossenzustand um die Mittellängsachse 4 rotiert, wird eine im Austragungsbereich 128 angeordnete Vertiefung in Form einer Aussparung 120, welche sich innerhalb des Dosierkopfs 3 befindet, mit der zu dosierenden Substanz befüllt. Im Anschluss daran erfolgt eine translatorische Verschiebung des Austragungs- und Verschlusselement 106 nach unten, wodurch der Austragungsbereich 128 in eine Lage ausserhalb des Dosierkopfs 101 gelangt. Dabei ragt der zweite Verschlussbereich 127b in die Austrittsöffnung 7 hinein und verschliesst diese. Durch Rotation und/oder unter der Wirkung eines Agitators (siehe Figur 6b) wird die zu dosierende Substanz aus der Aussparung 120 frei gegeben und gelangt in ein sich unterhalb der Dosiereinrichtung befindliches Gefäss. Letzteres befindet sich bevorzugt auf der Waagschale einer - hier nicht dargestellten, da nicht Gegenstand der Erfindung - Waage, welche zur Bestimmung der ausgetragenen Substanzmenge verwendet wird.

Die Austragungsfläche 110 ist eine zumindest einfach gekrümmte, um die Mittellängsachse 4 verwundene Fläche. Die Austragungsfläche könnte jedoch auch im Bereich der Aussparung 120 in zwei Richtungen konkav gekrümmt sein und/oder eine Verwindung um die Mittellängsachse 4 aufweisen. Wenn die Aussparung 120 mit zu dosierender Substanz befüllt ist, gelangt Letztere beim Verschieben des Austragungs-und Verschlusselements 106 entlang der Mittellängsachse 4 portionsweise ausserhalb des Dosierkopfs 3. Damit kann die Austragungsmenge von pulver- oder pastenförmiger Substanz gezielt gesteuert werden.

Eine konkave Krümmung der Austragungsfläche 110 und insbesondere eine leichte Verwindung der Aussparung 120 um die Mittellängsachse 4 bewirkt, dass die zu dosierende Substanz beim Rotieren des Austragungs- und Verschlusselements 106 gezielt von der Austragungsfläche 110 mitgenommen und damit die Aussparung 120 definiert befüllt wird. Die beschriebene Anordnung ist besonders gut verwendbar für den Fall des Dosierens von pulverförmigen Substanzen, die eine schlechte Rieseifähigkeit besitzen, also beispielsweise pappige Pulver, oder für das Dosieren pastenförmiger Substanzen. Hier ist es ferner von erheblichem Vorteil, wenn von einem Zufuhrwerkzeug 12 Gebrauch gemacht wird.

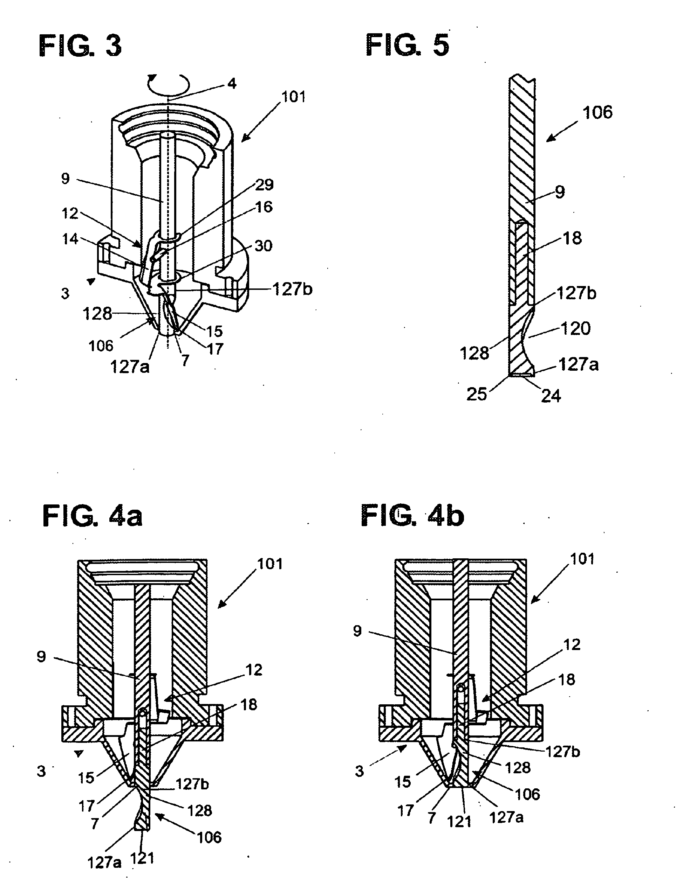

In der in Figur 3 dargestellten Ausführungsform ist ein Zufuhrwerkzeug 12 innerhalb des Dosierkopfs 101 angeordnet. Dieses weist eine Haltevorrichtung auf, mit welcher es die Stange 9 an zwei übereinander angeordneten Positionen ringförmig umgreift, wodurch das Zufuhrwerkzeug 12 mit der Stange 9 lose verbunden ist. Ferner besitzt das Zufuhrwerkzeug 12 einen Rührteil 14 und ein rakel- oder schaufelförmig ausgebildetes Zufuhrelement 15. Ein oberer Haltering 29 der Haltevorrichtung des Zufuhrwerkzeugs 12 ist oberhalb eines mit der Stange 9 fest verbundenen Querbolzens 16 angeordnet, ein unterer Haltering 30 unterhalb des Querbolzens 16. Damit ist das Zufuhrwerkzeug 12 in der Dosiervorrichtung geführt. Beim translatorischen Verschieben der Stange 9 entlang der Mittellängsachse 4, wenn zu dosierende Substanz ausgetragen werden soll, ist durch die lose Verbindung des Zufuhrwerkzeugs 12 mit der Stange 9 gewährleistet - hier vermittels Wirkung der Schwerkraft -, dass das Zufuhrwerkzeug 12 stets in losem Kontakt mit dem Rand der Austrittsöffnung 7 bleibt. Ausserdem bewirkt ein bei Rotation der Stange 9 entstehender Kontakt des Querbolzens 16 mit dem Rührteil 14, dass sich das Zufuhrwerkzeug 12 mitdreht.

Das Rührteil 14 dient der Auflockerung der zu dosierenden Substanz, während sie sich im Bereich des Dosierkopfs 101 befindet.

Das Zufuhrelement 15 umfasst vorzugsweise einen flächigen Bereich; der eine dem Rande der Austrittsöffnung 7 zugewandte Spitze 17 aufweist, wobei diese lose mit dem Rand der Austrittsöffnung 7 in Kontakt ist. Das Zufuhrelement 15, beziehungsweise dessen flächiger Bereich, weist bevorzugt eine gewölbte oder gekrümmte Form auf, wodurch das Zufuhrelement 15 stark koagulierendes Pulver schaufelartig mitnehmen und der Aussparung 120 zuführen kann.

Infolge der Rotation des Zufuhrwerkzeugs 12 um die Mittellängsachse 4, bewegt sich das Zufuhrelement 15 auf einer Kreisbahn. Es hat sich als vorteilhaft erwiesen, wenn die Position des Zufuhrelements 15 einen spitzen Anstellwinkel in tangentialer Richtung bezüglich seiner Kreisbahn bei Rotation um die Mittellängsachse 4 aufweist und/oder das Zufuhrelement 15 unter einem spitzen Anstellwinkel gegenüber der Mittellängsachse 4 geneigt ist. Insbesondere ist der Anstellwinkel des Zufuhrelements 15der Konsistenz der auszutragenden Substanz angepasst. Aufgrund der Form und Ausrichtung des Zufuhrwerkzeugs 12, ist für die in der Figur 3 gezeigte Ausführungsform der Dosiereinrichtung die Drehrichtung des Austragungs- und Verschlusselements 106, und damit hier auch des Zufuhrwerkzeugs 12, vorgegeben. Es erfolgt eine Drehung im Uhrzeigersinn.

Wie bereits oben erwähnt ist das Zufuhrwerkzeug 12 derart an der Stange 9 gelagert beziehungsweise geführt, dass es sich einerseits mit dieser mit dreht, andererseits aber bei einer Verschiebung der Stange 9 entlang der Mittellängsachse 4 im Gegensatz zu dieser beziehungsweise zum Austragungs- und Verschlusselement 106 seine Position beibehält, das heisst mit dem Zufuhrelement 15, insbesondere seiner Spitze 17 stets in losem Kontakt mit dem Rand der Austrittsöffnung 7 steht und so das Pulver beim Befüllen der Vertiefung 120 gegen diese führt, nach innen drückt jedoch auch gleichzeitig vom Rand Austrittsöffnung 7 abstreift. Dies ist in den Figuren 4a und 4b dargestellt, welche eine Schnittzeichnung des Dosierkopfs 101 zeigen.

In der für die Figuren 4a und 4b gewählten Darstellung ist auch die Verbindung des Austragungs- und Verschlusselements 106. mit der Stange 9 zu erkennen. Dabei greift ein Bolzen 18 mit gegenüber dem Durchmesser des Austragungs- und Verschlusselements 106 verringertem Durchmesser in die Stange 9 ein und ist beispielsweise mit dieser verschraubt, verklebt, verlötet oder in sonstiger Weise fest verbunden.

Das in den vorangehenden Figuren gezeigte Austragungs- und Verschlusselement 106 ist in der Figur 5 in einer Schnittzeichnung zu sehen. Das Austragungs- und Verschlusselement 106 ist mittels eines Bolzens 18, insbesondere eines Schraubbolzens an der Stange 9 befestigt. Wie hier beispielhaft dargestellt ist, kann ein Austragungs- und Verschlusselement 106, dessen erster Verschlussbereich 127a in der ersten Geschlossenstellung im Falle einer geschlossenen Austrittsöffnung 7 bündig mit dem Gehäuse 3 abschliesst (wie z.B. in Figur 4b gezeigt), an seiner Stirnfläche 121 eine Vertiefung 24 aufweisen. Diese Vertiefung 24 ist von einem Rand 25, der als Tropfkante wirkt, umschlossen, wodurch beim Dosieren stark koagulierender Substanzen keine Anhäufung von Material an der Stirnfläche 121 erfolgen kann.

Eine zweite Form des Austragungs- und Verschlusselements 206 ist in der Figur 6a in einer dreidimensionalen Darstellung des Dosierkopfs 201 und in der Figur 6b in der Seitenansicht zu sehen, wobei das Gehäuse 203 jeweils der Länge nach aufgeschnitten ist. Dabei ist der Austragungsbereich 228 des Austragungs- und Verschlusselements 206 als eine von der Zylindermantelfläche ausgehende nach unten spitz zulaufende, das heisst in ihrer Breite und Tiefe variierende Kerbe 46 ausgestaltet, wobei die Breite und die Tiefe zum ersten Verschlussbereich 127a hin abnehmen. Die Austragungsfläche ist hier unstetig. Es können auch mehrere Kerben, vorzugsweise in gleichmässiger Verteilung um den Umfang des Austragungsbereichs, an diesem angeordnet sein. Die Kerben können - wie in den Figuren 6a und 6b gezeigt - mit ihrer Spitze vertikal nach unten ausgerichtet sein oder auch schräg in den Austragungsbereich eingearbeitet sein.

Das in den Figuren 6a und 6b gezeigte zweite Zufuhrwerkzeug 212 weist ein Zufuhrelement 215 auf, welches ähnlich dem in den Figuren 3, 4a und 4b gezeigten ausgestaltet ist. Insbesondere weist die Ausrichtung des Zufuhrelements 215 in Bezug auf die Mittellängsachse 4 einen spitzen Anstellwinkel in tangentialer Richtung bezüglich seiner Kreisbahn bei Rotation um die Mittellängsachse 4 auf und ist unter einem spitzen Anstellwinkel gegenüber der Mittellängsachse 4 geneigt. Ferner ist das Zufuhrelement 215 unter einem Winkel zum Radius seiner Kreisbahn angeordnet und berührt den Rand der Austrittsöffnung 7 tangential. Der Lagerung und Führung des Zufuhrwerkzeugs 212 dient ein Mitnahmebereich 31 der Stange 9, welcher mindestens eine über ihre gesamte Länge sich erstreckende Nut 32 aufweist. Um den Mitnahmebereich 31 ist ein Haltering 33 des Zufuhrwerkzeugs 212 lose angeordnet, welcher mit einem Zapfen 34 in die Nut 32 eingreift. Bevorzugt sind zwei einander gegenüber liegende Nuten 32 und Zapfen 34 vorhanden, wobei die jeweils zweiten hier in der Figur nicht zu sehen wären, da durch die Stange 9 verdeckt. Dadurch ist das Zufuhrwerkzeug 212 gezwungen, sich mit der Stange 9 mitzudrehen, ist jedoch translatorisch entlang der Mittellängsachse 4 frei beweglich. Am Haltering 33 sind mehrere strahlenförmig sich von der Mittellängsachse 4 nach aussen erstreckende Ausleger 35 angeordnet, welche mit einer Spitze 37 in eine Kreisnut 36 am Gehäuse 203 hineinragen und dort beweglich geführt sind. Weitere Ausleger ohne Spitze 37 dienen als Rührelemente 38. Der Haltering 33, der Zapfen 34, die Ausleger 35 und die Rührelemente 38 liegen in einer Ebene orthogonal zur Mittellängsachse 4. Allerdings können die Rührelemente 38 auch nach oben oder nach unten gebogen sein und damit die Auflockerung der zu dosierenden Substanz verbessern. Mit einem Ausleger 235 ist das Zufuhrelement 215, vorzugsweise einstückig, verbunden Das Zufuhrwerkzeug 212 ist bevorzugt einstückig aus einem Blech oder aus Kunststoff hergestellt.

In der Figur 6b ist ein Agitator, der die Freigabe der zu dosierenden Substanz aus der Kerbe 46 unterstützt, schematisch eingezeichnet. Ein solcher Agitator kann als Schlag - oder Vibrationswerkzeug 49 ausgebildet sein, welches orthogonal zur Mittellängsachse 4 auf das Gehäuse 203 wirkt, und/oder als Schlag- oder Vibrationswerkzeug 48 ausgebildet sein, welches parallel zur Mittellängsachse 4 auf das Gehäuse 203 wirkt. Es versteht sich von selbst, dass ein solches Schlag- oder Vibrationswerkzeug auch auf das Austragungs- und Verschlusselement 206 oder auf die Stange 9 wirken kann. Ein Agitator kann alternativ auch als von aussen am Gehäuse um die Austrittsöffnung 7 angeordnete Lamellen oder Bürstenanordnung ausgebildet sein, wobei diese zur Freigabe der zu dosierenden Substanz in die Vertiefungen eingreifen können. Ferner ist ein Agitator, der eine mit ihrer Mündung dem Austragungs- und Verschlusselement zugewandte Druckluftdüse aufweist, denkbar.

In den Figuren 7a und 7b ist ein Dosierkopf 401 in zu den Figuren 6a und 6b analoger Darstellung gezeigt. Dieser Dosierkopf 401 weist eine dritte Ausführungsform des Austragungs- und Verschlusselements 406 und eine dritte Ausführungsform des Zufuhrwerkzeugs 412 auf. Das Austragungs-und Verschlusselement 406 weist in seinem Austragungsbereich 428 mehrere längliche Nuten 45 mit variabler Tiefe und Breite im Mantel des im wesentlichen zylinderförmig ausgestalteten Austragungs- und Verschlusselements 406 auf. Diese Nuten 45 sind in ihrer Längsausdehnung unter einem spitzen Winkel bezüglich der Mittellängsachse 4 ausgerichtet und stellen somit mehrere Vertiefungen für die portiensweise aufzunehmende und aus dem Dosierkopf 401 auszutragende Substanzen dar.

Das Zufuhrwerkzeug 412 besitzt drei Zufuhrelemente 415, welche einstückig mit einem Haltering 433 verbunden sind. Der Haltering 433 ist in gleicher Weise, wie bereits oben anhand der Figuren 6a bis 6d beschrieben, über einen Mitnahmebereich 31 und in dessen Nuten 32 eingreifende Zapfen 34 an der Stange 9 gelagert. Im Gegensatz zur dort dargestellten Ausführungsform, besitzt das hier gezeigte Zufuhrwerkzeug 412 keine Rührelemente 38, obwohl diese auch vorhanden sein könnten. Die Funktion der Rührens und Auflockerns der auszutragenden Substanz kann jedoch auch durch die drei Ausleger 435, sowie die drei Zufuhrelemente 415 erfüllt werden. Letztere sind im wesentlichen wie das weiter oben anhand der Figuren 6a und 6b beschriebene Zufuhrelement 215 gestaltet und im Dosierkopf ausgerichtet. Die drei Ausleger 435, von denen jeder mit einem Zufuhrelement 415 verbunden ist, weisen eine Spitze 37 auf, welche jeweils in der Kreisnut 36 des Gehäuses 3 beweglich geführt sind.

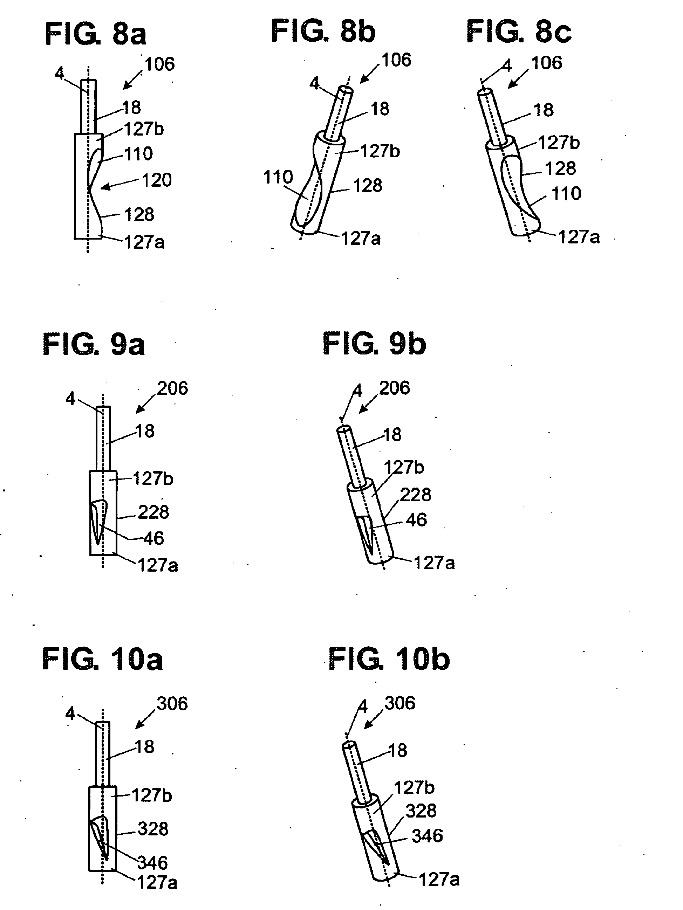

In Figur 8 ist die erste Ausgestaltung des Austragungs- und Verschlusselements 106, wie sie bereits anhand der Figuren 1 bis 5 beschrieben wurde, in verschiedenen Ansichten zu sehen; Figur 8a seitlich mit Blick auf die Austragungsfläche 110, Figur 8b und Figur 8c in einer dreidimensionalen Darstellung. Die Aussparung 120 im Austragungsbereich 128 ist von einer konkaven Austragungsfläche 110 begrenzt, deren Ränder nicht parallel zur orthogonal zur Mittellängsachse 4 ausgerichteten Ebene ausgerichtet sind, sondern mit dieser einen beliebigen Winkel einschliessen. Eine solche Aussparung lässt sich vermittels eines zylindrischen Einschnitts unter einem von 90° verschiedenen Winkel zur Mittellängsachse 4 herstellen.

Die Figur 9 zeigt die zweite Ausgestaltung des Verschlusselements 206, wie sie in den Figuren 6a und 6b dargestellt ist, in verschiedenen Ansichten; Figur 9a seitlich mit Blick auf die Austragungsfläche, Figur 9b in einer dreidimensionalen Darstellung. Die Kerbe 46, welche im Übrigen auch schräg gegenüber der Richtung der Mittellängsachse 4 ausgerichtet sein kann, erfasst vermittels Rotation beim Befüllen der Kerbe 46 die auszutragende Substanz und gibt sie durch deren nach unten spitz zulaufende Ausgestaltung besonders gut frei.

In den Figuren 10a und 10b ist in zu den Figuren 9a und 9b analoger Darstellung eine fünfte Ausgestaltung des Austragungs- und Verschlusselements 306 gezeigt. Im Austragungsbereich 328 sind als Vertiefungen zwei Kerben 346 (nur eine davon ist in den Darstellungen gemäss Figur 9a und 9b zusehen) an dem in der Grundform zylindrisch ausgestalteten Austragungs- und Verschlusselement 306 ausgebildet. Die Grundlinie 11 dieser Kerben 346 verlaufen nicht parallel zur Mittellängsachse, wie diens im Fall der in den Figuren 9a und 9b gezeigten Variante des Austragungs- und Verschlusselements 206 der Fall ist, sondern sind schräg dazu ausgerichtet.

In der Figur 11 ist die dritte Ausgestaltung des Austragungs- und Verschlusselements 406, wie sie in den Figuren 7a und 7b gezeigt ist, in der Ansicht 11 a seitlich mit Blick auf die Austragungsflächen und in 11 b in einer dreidimensionalen Darstellung zu sehen. Die in dieser Ausführungsform mehrfach angeordneten länglichen Nuten 45 mit variabler Tiefe und Breite im Mantel des im Wesentlichen zylinderförmig ausgestalteten Austragungs- und Verschlusselements 406 werden beispielsweise mittels Kugelfräsen erzeugt.

Figur 12 zeigt eine vierte Ausgestaltung des Austragungs- und Verschlusselements 806, in verschiedenen Ansichten; Figur 12a seitlich mit Blick auf die Austragungsflächen, Figur 12b in einer dreidimensionalen Darstellung. Drei längliche Vertiefungen 40 mit spiegetsymmetrischen kreisabschnittförmigen Rändern sind mit ihrer Symmetrieebene parallel zur Mittellängsachse 4 verlaufend um den Austragungsbereich 828 angeordnet.

In der Figur 13 ist eine sechste Ausformung des Austragungs- und Verschlusselements 606 zu sehen. Der Austragungsbereich 628 zeichnet sich durch drei übereinander angeordnete Vertiefungen in Form von kreisförmigen Mulden 41, 42, 43 aus. Diese Mulden 41, 42, 43, die im Übrigen voneinander verschiedene Durchmesser und/oder Tiefen aufweisen können, können in der ersten Geschlossenstellung des Austragungs- und Verschlusselements 606 mit zu dosierender Substanz befüllt werden. Die Substanz kann nun aus allen drei Mulden gleichzeitig ausgetragen werden, indem das Austragungs- und Verschlusselements 606 mit seinem zweiten Verschlussbereich 127b in der Austrittsöffnung 7 befindlich ist. Es kann jedoch auch eine sequentielle Freigabe der Substanz aus einer Mulde 41 oder aus zwei Mulden 41, 42 erfolgen, wenn das Austragungs- und Verschlusselement 606 sich mit den Bereichen zwischen den Mulden 41, 42 bzw. 42, 43 als dritter Veschlussbereich 127c oder als vierter Verschlussbereich 127d in der Austrittsöffnung 7 befindet. Selbstverständlich ist es auch denkbar, weitere Sets von Mulden 41, 42, 43 um das Austragungs- und Verschlusselements 606 anzuordnen.

Varianten des Gehäuses des Dosierkopfs sind ebenso wie verschiedene Ausführungsformen des Antriebs sind vorstellbar. Prinzipiell kann das Zufuhrwerkzeug auch einen eigenen Antrieb haben und unabhängig vom Austragungs- und Verschlusselement sowohl translatorisch als auch rotatorisch bewegt werden. Die Stange mit dem Austragungs- und Verschlusselement kann in weiterer Ausgestaltung in Richtung der Mittellängsachse vorgespannt sein, so dass bei entkoppeltem Antrieb die Austrittsöffnung selbsttätig verschlossen wird.

Die Austrittsöffnung kann auch rohrartig ausgebildet sein, so dass in Zwischenpositionen, die mindestens eine Vertiefung gesamthaft durch die Austrittsöffnung abgedeckt werden kann.

### Bezugszeichenliste

- 101, 201, 401: Dosierkopf
- 2: Entnahmegefäss
- 3,203,403: Gehäuse
- 4: Mittellängsachse
- 5: Innengewinde
- 106, 206, 306, 406, 606, 806: Austragungs- und Verschlusselement
- 7: Austrittsöffnung
- 8: Aussengewinde
- 9: Stange
- 110: Austragungsfläche
- 11: Grundlinie der Kerbe
- 12,212,412: Zufuhrwerkzeug
- 14: Rührteil
- 15, 215, 415: Zufuhrelement
- 16: Querbolzen
- 17: Spitze des Zufuhrelements
- 18: Bolzen
- 19: Kupplungsbereich
- 120: Aussparung
- 121: Stirnfläche
- 23: Vorsprung
- 24: Vertiefung
- 25: Rand der Vertiefung
- 127a, 127b, 127c, 127d: Verschlussbereich
- 128, 228, 328, 428, 628, 828: Austragungsbereich
- 29: Oberer Haltering
- 30: Unterer Haltering
- 31: Mitnahmebereich
- 32: Nut
- 33: Haltering
- 34: Zapfen
- 35, 235, 435: Ausleger
- 36: Kreisnut
- 37: Spitze
- 38: Rührelement
- 40: Längliche Vertiefung
- 41: kreisförmige Mulde
- 42: kreisförmige Mulde
- 43: kreisförmige Mulde
- 45: längliche Nut
- 46, 346: Kerbe
- 48: Schlag- oder Vibrationswerkzeug
- 49: Schlag- oder Vibrationswerkzeug

## Patentansprüche

1. Dosiereinrichtung für pulver- oder pastenförmige Substanzen mit einem Entnahmegefäss (2) und einem damit verbundenen oder verbindbaren Dosierkopf (1), der ein Gehäuse (3) mit einer mit kreisförmigem Querschnitt versehenen Austrittsöffnung (7) und ein Austragungs- und Verschlusselement (106, 206, 306, 406, 606, 806) aufweist, wobei die Austrittsöffnung (7) und das Austragungs- und Verschlusselement (106, 206, 306, 406, 606, 806) auf der Mittellängsachse (4) des Dosierkopfs (1) angeordnet sind, und wobei das Austragungs- und Verschlusselement (106, 206, 306, 406, 606, 806) relativ zum Gehäuse (3) um die Mittellängsachse (4) rotierbar und entlang der Mittellängsachse (4) bezüglich der Austrittsöffnung (7) translatorisch verschiebbar ausgestaltet ist, **dadurch gekennzeichnet, dass** das Austragungs- und Verschlusselement (106, 206, 306, 406, 606, 806) in seiner Grundform zylinderförmig ausgebildet ist, mindestens zwei dem Verschliessen der Austrittsöffnung (7) dienende, entlang der Mittellängsachse (4) voneinander beabstandet angeordnete zylinderförmige Verschlussbereiche (127a, 127b) und einen zwischen den Verschlussbereichen (127a, 127b) angeordneten, der Austragung von zu dosierender Substanz dienenden Austragungsbereich (128, 228, 328, 428, 628, 828) aufweist, wobei der Austragungsbereich (128, 228, 328, 428, 628, 828) mit mindestens einer vom Zylindermantel ausgehenden Vertiefung versehen ist.

2. Dosiereinrichtung nach Anspruch 1, **dadurch gekennzeichnet, dass** in deren betriebsbereitem Zustand ein erster Verschlussbereich (127a) unterhalb des Austragungsbereichs (128, 228, 328, 428, 628, 828) angeordnet ist und ein zweiter Verschlussbereich (127b) oberhalb des Austragungsbereichs (128, 228, 328, 428, 628, 828) angeordnet ist.

3. Dosiereinrichtung nach Anspruch 1 oder 2, **dadurch gekennzeichnet, dass** das Austragungs- und Verschlusselement (106, 206, 306, 406, 606, 806) sowohl wenn sich der erste Verschlussbereich (127a) in der Austrittsöffnung (7) befindet, als auch wenn sich der zweite Verschlussbereich (127b) in der Austrittsöffnung (7) befindet, rotierbar ist.

4. Dosiereinrichtung nach einem der Ansprüche 1 bis 3, **dadurch gekennzeichnet, dass** die mindestens eine Vertiefung eine stetige, eine Austragungsfläche (110) bildende Oberfläche aufweist.

5. Dosiereinrichtung nach einem der Ansprüche 1 bis 3, **dadurch gekennzeichnet, dass** die Vertiefung in Form einer Kerbe (46, 346) ausgebildet ist und eine unstetige eine Austragungsfläche bildende Oberfläche aufweist.

6. Dosiereinrichtung nach Anspruch 4, **dadurch gekennzeichnet, dass** die Austragungsfläche (110) in einer oder in zwei Richtungen konkav gekrümmt ausgeformt ist.

7. Dosiereinrichtung nach einem der Ansprüche 4 bis 6, **dadurch gekennzeichnet, dass** die Austragungsfläche (110) um die Mittellängsachse (4) verwunden ausgeformt ist.

8. Dosiereinrichtung nach einem der Ansprüche 1 bis 3, **dadurch gekennzeichnet, dass** der Austragungsbereich (828) mindestens zwei übereinander abgeordnete Vertiefungen, insbesondere kreisförmige Mulden (41, 42, 43), aufweist.

9. Dosiereinrichtung nach einem der Ansprüche 2 bis 8, **dadurch gekennzeichnet, dass** der erste Verschlussbereich (127a) in der Geschlossenstellung des Austragungs- und Verschlusselements (106, 206, 306, 406, 606, 806) an dessen in der Betriebsstellung unterem Ende bündig mit dem Gehäuse (3) abschliessend, angeordnet ist.

10. Dosiereinrichtung nach Anspruch 9, **dadurch gekennzeichnet, dass** der erste Verschlussbereich (127a) an seiner Stirnfläche (121) eine von einem als Tropfkante wirkenden Rand (25) umschlossene Vertiefung (24) aufweist.

11. Dosiereinrichtung nach einem der Ansprüche 1 bis 10, **dadurch gekennzeichnet, dass** die Breite und/oder die Tiefe der mindestens einen Vertiefung des Austragungsbereichs (128, 228, 328, 428, 628, 828) sich in Richtung des ersten und/oder des zweiten Verschlussbereichs (127a, 127b) verkleinernd variiert.

12. Dosiereinrichtung nach einem der Ansprüche 1 bis 11, **dadurch gekennzeichnet, dass** das Austragungs- und Verschlusselement (106, 206, 306, 406, 606, 806) mit einer entlang der Mittellängsachse (4) angeordneten Stange (9), welche das Entnahmegefäss (2) als Antriebswelle durchdringt, verbunden ist.

13. Dosiereinrichtung nach einem der Ansprüche 1 bis 12, **dadurch gekennzeichnet, dass** ein der Zufuhr von zu dosierender Substanz dienendes Zufuhrwerkzeug (12, 212, 412) vorhanden ist, welches um die Mittellängsachse (4) rotierbar ausgestaltet ist und relativ zum Austragungs- und Verschlusselement (106, 206, 306, 406, 606, 806) translatorisch entlang der Mittellängsachse (4) verschiebbare gelagert ist.

14. Dosiereinrichtung nach Anspruch 13, **dadurch gekennzeichnet, dass** das Zufuhrwerkzeug (12, 212, 412) an der Stange (9) und relativ zu dieser translatorisch entlang der Mittellängsachse (4) verschiebbar gelagert und/oder geführt ist.

15. Dosiereinrichtung nach Anspruch 12 oder 13, **dadurch gekennzeichnet, dass** das Zufuhrwerkzeug (12, 212, 412) ein Rührteil (14) und ein Zufuhrelement (15, 215, 415) aufweist, wobei das Zufuhrelement (15, 215, 415) im Betrieb der Dosiereinrichtung stets mit dem Rand der Austrittsöffnung (7) in losem Kontakt ist.

16. Dosiereinrichtung nach einem der Ansprüche 1 bis 15 **dadurch gekennzeichnet, dass** das Gehäuse (3, 203, 403) sich in Richtung zur Austrittsöffnung (7) verjüngt.

17. Dosiereinrichtung nach einem der Ansprüche 1 bis 16 **dadurch gekennzeichnet, dass** das Austragungs- und Verschlusselement (106, 206, 306, 406, 606, 806) aus Metall oder aus Keramik gefertigt ist, wobei die Oberfläche der mindestens eine Vertiefung eine Oberflächenrauhigkeit Rₐ kleiner als 0.003 mm besitzt.

18. Dosiereinrichtung nach einem der Ansprüche 1 bis 17 **dadurch gekennzeichnet, dass** mindestens ein ausserhalb derselben angeordneter Agitator zum Entfernen der zu dosierenden Substanz aus der mindestens einen Vertiefung vorhanden ist.

19. Dosiereinrichtung nach Anspruch 18, **dadurch gekennzeichnet, dass** der mindestens eine Agitator in die mindestens eine Vertiefung eingreifbare Bürsten oder Lamellen umfasst.

20. Dosiereinrichtung nach Anspruch 18, **dadurch gekennzeichnet, dass** der mindestens eine Agitator mindestens eine mit ihrer Mündung dem Austragungs-und Verschlusselement zugewandte Druckluftdüse umfasst.

21. Dosiereinrichtung nach Anspruch 18, **dadurch gekennzeichnet, dass** der mindestens eine Agitator ein Schlag- und/oder Vibrationswerkzeug (48, 49) aufweist, welches parallel und/oder orthogonal zur Mittellängsachse (4) auf das Gehäuse (3, 203, 403) und/oder das Austragungs- und Verschlusselement (106, 206, 306, 406, 606, 806) und/oder die Stange (9) einwirkbar ausgeformt ist.

22. Verfahren zum Dosieren von pulver- oder pastenförmigen Substanzen aus einem Entnahmegefäss (2) mit einem damit verbundenen oder verbindbaren Dosierkopf (101, 201, 401), nach Anspruch 1 bis 21, **dadurch gekennzeichnet, dass**
o in einem ersten Geschlossenzustand der Austrittsöffnung (7), bei dem sich der erste Verschlussbereich (127a) innerhalb der Austrittsöffnung (7) und der Austragungsbereich (128, 228, 328, 428, 628, 828) innerhalb des Dosierkopfs (101, 201, 401) befinden, die mindestens eine Vertiefung vermittels Rotation des Austragungs- und Verschlusselements (106, 206, 306, 406, 606, 806) mit Substanz befüllt wird;
o die mindestens eine mit Dosiergut befüllte Vertiefung des Austragungsbereichs (128, 228, 328, 428, 628, 828) vermittels einer Verschiebung des Austragungs-und Verschlusselements (106, 206, 306, 406, 606, 806) entlang der Mittellängsachse (4) in einen Bereich ausserhalb des Dosierkopfs (101, 201, 401) transportiert wird;
o. in einem zweiten Geschlossenzustand der Austrittsöffnung (7); bei dem sich der zweite Verschlussbereich (127b) innerhalb der Austrittsöffnung (7) befindet, die Substanz aus der mindestens einen Vertiefung mittels Rotation des Austragungs- und Verschlusselements (106, 206, 306, 406, 606, 806) abgegeben wird.

23. Verfahren nach Anspruch 22, **dadurch gekennzeichnet, dass** vermittels des Zufuhrwerkzeugs (12, 212, 412) zu dosierende Substanz in die mindestens eine Vertiefung eingebracht wird.

24. Verfahren nach Anspruch 23, **dadurch gekennzeichnet, dass** ein Agitator vorhanden ist, und dass vermittels des Agitators die Substanz aus der mindestens einen Vertiefung des Austragungsbereichs (128, 228, 328, 428, 628, 828) herausgelöst und freigegeben wird.

## Claims

1. Dosage-dispensing device for substances in powder- or paste form with a supply container (2) and with a dosage-dispensing head (1) that is connected or connectable to the supply container (2), said dosage-dispensing head (1) comprising a housing (3) with an outlet orifice (7) of circular cross-section and a delivery- and closure element (106, 206, 306, 406, 606, 806), wherein the outlet orifice (7) and the delivery- and closure element (106, 206, 306, 406, 606, 806) are arranged on the central lengthwise axis (4) of the dosage-dispensing head (1), and the delivery- and closure element (106, 206, 306, 406, 606, 806) is designed to be rotatable about the central lengthwise axis (4) in relation to the housing (3) and to be capable of translatory displacement relative to the outlet orifice (7) along the central lengthwise axis (4), **characterized in that** the delivery- and closure element (106, 206, 306, 406, 606, 806) in its basic configuration is of a cylindrical shape and has at least two closure portions (127a, 127b) that are arranged at a distance from each other along the central lengthwise axis (4) and serve to close off the outlet orifice (7) and further has, between the closure portions (127a, 127b), a delivery portion (128, 228, 328, 428, 628, 828) that serves to deliver the substance to be dispensed, wherein said delivery portion (128, 228, 328, 428, 528, 828) comprises at least one recess that is indented from the cylinder wall.

2. Dosage-dispensing device according to claim 1, **characterized in that** in relation to the operating position of the dosage-dispensing device, a first closure portion (127a) is arranged below the delivery portion (128, 228, 328, 428, 628, 828) and a second closure portion (127b) is arranged above the delivery portion (128, 228, 328, 428, 628, 828).

3. Dosage-dispensing device according to claim 1 or 2, **characterized in that** the delivery- and closure element (106, 206, 306, 406, 606, 806) is able to rotate when the first closure portion (127a) is located in the outlet orifice (7) as well as when the second closure portion (127b) is located in the outlet orifice (7).

4. Dosage-dispensing device according to one of the claims 1 to 3, **characterized in that** the at least one recess has a continuous surface which forms a delivery surface (110).

5. Dosage-dispensing device according to one of the claims 1 to 3, **characterized in that** the recess is configured in the shape of a triangular groove (46, 346) and has a discontinuous surface which forms a delivery surface.

6. Dosage-dispensing device according to claim 4, **characterized in that** the delivery surface (110) is shaped with a concave curvature in one or in two directions.

7. Dosage-dispensing device according to one of the claims 4 to 6, **characterized in that** the delivery surface (110) is shaped with a spiraling twist about the central lengthwise axis (4).

8. Dosage-dispensing device according to one of the claims 1 to 3, **characterized in that** the closure delivery portion (828) has at least two recesses arranged above each other, in particular in the shape of circular indentations (41, 42, 43).

9. Dosage-dispensing device according to one of the claims 2 to 8, **characterized in that** when the delivery- and closure element (106, 206, 306, 406, 606, 806) is in its closed position, the first closure portion (127a) is positioned so that its lower end relative to the operating position ends in flush alignment with the housing (3).

10. Dosage-dispensing device according to claim 9, **characterized in that** the first closure portion (127a) has at its front surface (121) a recess (24) that is surrounded by a rim (25) which functions as a drop-releasing edge.

11. Dosage-dispensing device according to one of the claims 1 to 10, **characterized in that** the width and/or the depth of the at least one recess of the delivery portion (128, 228, 328, 428, 628, 828) vary in such a way that the profile of said recess becomes smaller in the direction towards the first and/or the second closure portion (127a, 127b).

12. Dosage-dispensing device according to one of the claims 1 to 11, **characterized in that** the delivery- and closure element (106, 206, 306, 406, 606, 806) is connected to a rod (9) which is arranged along the central lengthwise axis (4) and traverses the supply container (2) as a drive shaft.

13. Dosage-dispensing device according to one of the claims 1 to 12, **characterized in that** the dosage-dispensing device comprises a conveying tool (12, 212, 412) which serves to convey substance to be dispensed and which is configured to be rotatable about the central lengthwise axis (4) and supported in a way that allows translatory movement relative to the delivery- and closure element (106, 206, 306, 406, 606, 806) along the central lengthwise axis 4.

14. Dosage-dispensing device according to claim 13, **characterized in that** the conveying tool (12, 212, 412) is supported and/or guided on the rod (9) in a way that allows translatory movement along the rod (9) and relative to said rod (9).

15. Dosage-dispensing device according to claim 12 or 13, **characterized in that** the conveying tool (12, 212, 412) comprises a stirrer part (14) and a conveying element (15, 215, 415), wherein the conveying element (15, 215, 415) is always in loose contact with the rim of the delivery orifice (7) when the dosage-dispensing device is in operation.

16. Dosage-dispensing device according to one of the claims 1 to 15, **characterized in that** the housing (3, 203, 403) has a narrowing taper in the direction towards the outlet orifice (7).

17. Dosage-dispensing device according to one of the claims 1 to 16, **characterized in that** the delivery- and closure element (106, 206, 306, 406, 606, 806) is made of metal or a ceramic material, wherein the surface of the at least one recess has a surface roughness Rₐ of less than 0.003 mm.

18. Dosage-dispensing device according to one of the claims 1 to 17, **characterized in that** the dosage-dispensing device comprises at least one agitator disposed at the exterior of the device, which serves to remove the substance to be dispensed from the at least one recess.

19. Dosage-dispensing device according to claim 18, **characterized in that** the at least one agitator comprises brushes or lamellar wipers that can reach into the at least one recess.

20. Dosage-dispensing device according to claim 18, **characterized in that** the at least one agitator comprises at least one air jet nozzle whose orifice is directed at the delivery- and closure element.

21. Dosage-dispensing device according to claim 18, **characterized in that** the at least one agitator comprises a knocking- and/or vibrating tool (48, 49) which is designed to act on the housing (3, 203, 403) and/or on the delivery- and closure element (106, 206, 306, 406, 606, 806) and/or on the rod (9) with its action directed parallel and/or orthogonal to the central lengthwise axis (4).

22. Method for dispensing substances in the form of a powder or paste in measured doses from a supply container (2) to which a dosage-dispensing head (101, 201, 401) is or can be connected in accordance with claim 1 to 21, **characterized in that**:
- in a first closed condition of the outlet orifice (7), where the first closure portion (127a) is located in the outlet orifice (7) and the delivery portion (128, 228, 328, 428, 628, 828) is located inside the dosage-dispensing head (101, 201, 401), the at least one recess is filled with substance through a rotation of the delivery- and closure element (106, 206, 306, 406, 606, 806);
- the at least one recess of the delivery portion (128, 228, 328, 428, 628, 828) which is filled with the substance to be dispensed is moved into an area outside of the dosage-dispensing head (101, 201, 401) through a translatory displacement of the delivery- and closure element (106, 206, 306, 406, 606, 806) along the central lengthwise axis (4); and
- in a second closed condition of the outlet orifice (7), where the second closure portion (127b) is located in the outlet orifice (7), the substance is released from the at least one recess through a rotation of the delivery- and closure element (106, 206, 306, 406, 606, 806).

23. Method according to claim 22, **characterized in that** substance to be dispensed is brought into the at least one recess by means of the conveying tool (12, 212, 412).

24. Method according to claim 23, **characterized by** the presence of an agitator by means of which the substance is released and set free from the at least one recess of the delivery portion (128, 228, 328, 428, 628, 828).

## Revendications

1. Dispositif de dosage pour des substances sous forme de poudre ou de pâte, comprenant un récipient de prélèvement (2) et une tête de dosage (1) reliée ou pouvant être reliée à ce récipient, laquelle tête présente un boîtier (3) avec une ouverture de sortie (7) dotée d'une section circulaire et un élément d'évacuation et de fermeture (106, 206, 306, 406, 606, 806), l'ouverture de sortie (7) et l'élément d'évacuation et de fermeture (106, 206, 306, 406, 606, 806) étant disposés sur l'axe longitudinal médian (4) de la tête de dosage (1), et l'élément d'évacuation et de fermeture (106, 206, 306, 406, 606, 806) étant conçu de façon à pouvoir tourner par rapport au boîtier (3) autour de l'axe longitudinal médian (4) et de façon à pouvoir coulisser par translation le long de l'axe longitudinal médian (4) par rapport à l'ouverture de sortie (7), **caractérisé en ce que** l'élément d'évacuation et de fermeture (106, 206, 306, 406, 606, 806) est conçu cylindrique dans sa forme de base, présente au moins deux zones de fermeture (127a, 127b) de forme cylindrique, servant à la fermeture de l'ouverture de sortie (7), disposées le long de l' axe longitudinal médian (4) de façon espacée l'une de l' autre et une zone d'évacuation (128, 228, 328, 428, 628, 828) disposée entre les zones de fermeture (127a, 127b) et servant à l'évacuation de la substance à doser, la zone d'évacuation (128, 228, 328, 428, 628, 828) étant dotée d'au moins un évidement partant de l'enveloppe de cylindre.

2. Dispositif de dosage selon la revendication 1, **caractérisé en ce que**, dans son état opérationnel, une première zone de fermeture (127a) est disposée au-dessous de la zone d'évacuation (128, 228, 328, 428, 628, 828) et une seconde zone de fermeture (127b) est disposée au-dessus de la zone d'évacuation (128, 228, 328, 428, 628, 828).

3. Dispositif de dosage selon la revendication 1 ou 2, **caractérisé en ce que** l'élément d'évacuation et de fermeture (106, 206, 306, 406, 606, 806) peut tourner aussi bien lorsque la première zone de fermeture (127a) se trouve dans l'ouverture de sortie (7) que lorsque la seconde zone de fermeture (127b) se trouve dans l'ouverture de sortie (7).

4. Dispositif de dosage selon l'une des revendications 1 à 3, **caractérisé en ce que** le au moins un évidement présente une surface continue, formant une surface d'évacuation (110).

5. Dispositif de dosage selon l'une des revendications 1 à 3, **caractérisé en ce que** l'évidement est conçu sous forme d'une entaille (46, 346) et présente une surface discontinue, formant une surface d'évacuation.

6. Dispositif de dosage selon la revendication 4, **caractérisé en ce que** la surface d'évacuation (110) est formée avec une courbure concave dans une ou dans deux directions.

7. Dispositif de dosage selon l'une des revendications 4 à 6, **caractérisé en ce que** la surface d'évacuation (110) est formée de façon tordue autour de l'axe longitudinal médian (4).

8. Dispositif de dosage selon l'une des revendications 1 à 3, **caractérisé en ce que** la zone d'évacuation (828) présente au moins deux évidements disposés l'un au-dessus de l'autre, en particulier des cavités (41, 42, 43) de forme circulaire.

9. Dispositif de dosage selon l'une des revendications 2 à 8, **caractérisé en ce que** la première zone de fermeture (127a) est disposée, lorsque l'élément d'évacuation et de fermeture (106, 206, 306, 406, 606, 806) se trouve dans la position fermée, sur son extrémité, inférieure dans la position de service, en se terminant au niveau du boîtier (3).

10. Dispositif de dosage selon la revendication 9, **caractérisé en ce que** la première zone de fermeture (127a) présente sur sa surface frontale (121) un évidement (24) enfermé par un bord (25) agissant comme arête anti-goutte.

11. Dispositif de dosage selon l'une des revendications 1 à 10, **caractérisé en ce que** la largeur et/ou la profondeur du au moins un évidement de la zone d'évacuation (128, 228, 328, 428, 628, 828) varie en se réduisant en direction de la première et/ou de la seconde zone de fermeture (127a, 127b).

12. Dispositif de dosage selon l'une des revendications 1 à 11, **caractérisé en ce que** l'élément d'évacuation et de fermeture (106, 206, 306, 406, 606, 806) est relié à une barre (9) disposée le long de l'axe longitudinal médian (4), laquelle barre pénètre dans le récipient de prélèvement (2) comme arbre d'entraînement.

13. Dispositif de dosage selon l'une des revendications 1 à 12, **caractérisé en ce qu'**un outil d'alimentation (12, 212, 412) servant à l'alimentation de substance à doser est présent, lequel outil est conçu de façon à pouvoir tourner autour de l'axe longitudinal médian (4) et est fixé de façon à pouvoir coulisser par rapport à l'élément d'évacuation et de fermeture (106, 206, 306, 406, 606, 806) par translation le long de l'axe longitudinal médian (4).

14. Dispositif de dosage selon la revendication 13, **caractérisé en ce que** l'outil d'alimentation (12, 212, 412) est monté et/ou guidé sur la barre (9) et de façon à pouvoir coulisser par rapport à cette barre par translation le long de l'axe longitudinal médian (4).

15. Dispositif de dosage selon la revendication 12 ou 13, **caractérisé en ce que** l'outil d'alimentation (12, 212, 412) présente une partie agitatrice (14) et un élément d'alimentation (15, 215, 415), l'élément d'alimentation (15, 215, 415) étant toujours en contact amovible avec le bord de l'ouverture de sortie (7) lorsque le dispositif de dosage fonctionne.

16. Dispositif de dosage selon l'une des revendications 1 à 15, **caractérisé en ce que** le boîtier (3, 203, 403) se rétrécit en direction de l'ouverture de sortie (7).

17. Dispositif de dosage selon l'une des revendications 1 à 16, **caractérisé en ce que** l'élément d'évacuation et de fermeture (106, 206, 306, 406, 606, 806) est fabriqué à base de métal ou de céramique, la surface du au moins un évidement présentant une rugosité de surface Rₐ inférieure à 0,003 mm.

18. Dispositif de dosage selon l'une des revendications 1 à 17, **caractérisé en ce qu'**au moins un agitateur disposé à l'extérieur du dispositif est présent pour enlever la substance à doser du au moins un évidement.

19. Dispositif de dosage selon la revendication 18, **caractérisé en ce que** le au moins un agitateur comprend des brosses ou lamelles pouvant s'engager dans le au moins un évidement.

20. Dispositif de dosage selon la revendication 18, **caractérisé en ce que** le au moins un agitateur comprend au moins une buse d'air comprimé tournée avec son ouverture vers l'élément d'évacuation et de fermeture.

21. Dispositif de dosage selon la revendication 18, **caractérisé en ce que** le au moins un agitateur présente un outil de frappe et/ou de vibration (48, 49), qui est formé parallèlement et/ou perpendiculairement à l'axe longitudinal médian (4) pour pouvoir agir sur le boîtier (3, 203, 403) et/ou l'élément d'évacuation et de fermeture (106, 206, 306, 406, 606, 806) et/ou la barre (9).

22. Procédé pour doser des substances sous forme de poudre ou de pâte à partir d'un récipient de prélèvement (2) avec une tête de dosage (101, 201, 401) relié ou pouvant être reliée au récipient, selon les revendications 1 à 21, **caractérisé en ce que**
• dans un premier état fermé de l'ouverture de sortie (7), dans lequel la première zone de fermeture (127a) et la zone d'évacuation (128, 228, 328, 428, 628, 828) se trouvent respectivement à l'intérieur de l'ouverture de sortie (7) et à l'intérieur de la tête de dosage (101, 201, 401), le au moins un évidement étant rempli de substance par rotation de l'élément d'évacuation et de fermeture (106, 206, 306, 406, 606, 806) ;
• le au moins un évidement, rempli de l'article à doser, de la zone d'évacuation (128, 228, 328, 428, 628, 828) est transporté au moyen d'un déplacement de l'élément d'évacuation et de fermeture (106, 206, 306, 406, 606, 806) le long de l'axe longitudinal médian (4) dans une zone à l'extérieur de la tête de dosage (101, 201, 401) ;
• dans un second état fermé de l'ouverture de sortie (7), dans lequel la seconde zone de fermeture (127b) se trouve à l'intérieur de l'ouverture de sortie (7), la substance venant du au moins un évidement est délivrée par rotation de l'élément d'évacuation et de fermeture (106, 206, 306, 406, 606, 806).

23. Procédé selon la revendication 22, **caractérisé en ce que** la substance à doser est introduit dans le au moins un évidement au moyen de l'outil d'alimentation (12, 212, 412).

24. Procédé selon la revendication 23, **caractérisé en ce qu'**un agitateur est présent, et **en ce que**, au moyen de l'agitateur, la substance est détachée du au moins un évidement de la zone d'évacuation (128, 228, 328, 428, 628, 828) et est libérée.
